# EUROPÄISCHE PATENTSCHRIFT

(11) **EP 1 868 859 B1**
(45) Veröffentlichungstag und Bekanntmachung des Hinweises auf die Patenterteilung: **18.08.2010**
(21) Anmeldenummer: 06725560.4
(22) Anmeldetag: 05.04.2006
(51) Int. Cl.: B60S 1/38

(54) **WISCHGUMMI**
WIPER BLADE RUBBER
ELEMENT D'ESSUYAGE EN CAOUTCHOUC

(30) Priorität: 07.04.2005 DE 102005016145; 21.11.2005 DE 102005055343
(43) Veröffentlichungstag der Anmeldung: 26.12.2007
(73) Patentinhaber: ROBERT BOSCH GMBH, 70442 Stuttgart (DE)
(72) Erfinder: WILMS, Christian, B-3582 Koersel-Beringen (BE); BUSEYNE, Wim, B-3500 Hasselt (BE); VAN DE ROSTYNE, Kris, B-3000 Leuven (BE); VRANKEN, Curt, B-3440 Zoutleeuw (BE)
(86) Internationale Anmeldenummer: PCT/EP2006/061327
(87) Internationale Veröffentlichungsnummer: WO 2006/106109

(56) Entgegenhaltungen:
- EP-A- 0 743 231
- EP-A- 1 050 442
- EP-A- 1 145 831
- FR-A- 1 306 952
- FR-A- 2 595 642
- US-B1- 6 618 895
- PATENT ABSTRACTS OF JAPAN Bd. 010, Nr. 261 (M-514), 5. September 1986 (1986-09-05) -& JP 61 085245 A (NIPPON DENSO CO LTD), 30. April 1986 (1986-04-30)
- PATENT ABSTRACTS OF JAPAN Bd. 1998, Nr. 01, 30. Januar 1998 (1998-01-30) -& JP 09 226529 A (SHIN ETSU POLYMER CO LTD), 2. September 1997 (1997-09-02)
- PATENT ABSTRACTS OF JAPAN Bd. 017, Nr. 439 (M-1462), 13. August 1993 (1993-08-13) -& JP 05 097014 A (NISSAN MOTOR CO LTD), 20. April 1993 (1993-04-20)

## Beschreibung

### Stand der Technik

Die Erfindung geht von einem Wischgummi nach dem Oberbegriff des Anspruchs 1 aus.

Übliche Wischgummis für Scheibenwischer von Kraftfahrzeugen verursachen in den Wendelagen der Wischbewegung zu hohe Umlegegeräusche. Ursache hierfür ist ein impulsartiger Schlag einer Keilschulter, die die Wischleiste zur Kopfleiste des Wischgummis hin begrenzt, gegen die gegenüberliegende Streifleiste beim Umlegen. Dadurch werden verschiedene Resonanzen der Fahrzeugscheibe angeregt, welche im Fahrzeug wie Umlegegeräusche wahrgenommen werden. Diese Umlegegeräusche werden meistens als sehr störend empfunden.

Aus der EP 0 743 231 A1 ist ein Wischgummi bekannt, der eine Kopfleiste mit zwei seitlichen Längsnuten besitzt, in die Federschienen eingesetzt sind. An die Kopfleiste schließen sich über einen Steg Streifleisten an, die wiederum über einen Kippsteg mit einer Wischleiste verbunden sind. Im Betriebszustand liegt die Wischleiste mit einer Wischlippe an einer zu reinigenden Fahrzeugscheibe an. Die Wischleiste verbreitert sich keilförmig bis zu ihren Keilschultern, deren obere Begrenzungen mit dem Kippsteg verbunden sind. Der Steg und der Kippsteg werden an ihren Längsseiten durch Nuten begrenzt, in denen Maßnahmen vorgesehen sind, um die Geräusche beim Umlegen der Wischleiste in den Wendepunkten der Wischbewegung des Scheibenwischers zu vermindern. Diese Maßnahmen bestehen z.B. aus elastisch nachgiebigen Lippen an einer Längskante einer Nut, wobei die Lippe mit geringem Abstand zur Gegenfläche verläuft und sich beim Umlegen der Wischleiste an die Gegenfläche anlegt. Andere Maßnahmen bestehen in Noppen und Kerben, die an den Keilschultern bzw. Streifleisten vorgesehen sind. Die Kerben sind relativ schmal und flach und ihre Abstände voneinander entsprechen etwa ihrer Breite. Die Lippen, Noppen und Kerben verringern die Kontaktfläche zwischen den Keilschultern und den Streifleisten sowie zwischen der Streifleiste und der Kopfleiste, sodass das Anlagegeräusch gedämpft wird.

Dokument FR-A-1 306 952 offenbart die Merkmale des Oberbegriffs des Anspruchs 1.

### Vorteile der Erfindung

Nach der Erfindung weist der Wischgummi eine Härte zwischen fünfzig und fünfundsechzig Shorehärte A (ShA) auf und die Härte ist so auf die Gestaltung des Stegprofils abgestimmt, dass sich eine minimale Geräuschentwicklung beim Umlegevorgang ergibt. Außerdem besitzen die Keilschultern und/oder die Streifleisten von ihren Längsseiten zum Kippsteg hin verlaufende Ausschnitte, deren Abstände voneinander mindestens doppelt so groß sind wie deren Breiten. Die Ausschnitte, die zumindest die Randbereiche der Keilschultern und/oder der Streifleisten in Längsrichtung unterbrechen, sind in Längsrichtung des Wischgummis etwa 5 mm breit, während ihre Abstände voneinander vorzugsweise fünf bis zehnmal so groß wie ihre Breiten sind. Durch die Ausschnitte wird zum einen die Kontaktfläche im Augenblick des Anlegens der Keilschultern bzw. der Streifleisten verringert, zum anderen wird die Nachgiebigkeit der verbleibenden Teile der Keilschultern und Streifleisten vergrößert. Die Nachgiebigkeit dieser Teile kann durch die Breite der Ausschnitte und ihre Abstände voneinander sowie durch die Tiefe der Ausschnitte in Richtung des Kippstegs variiert und somit auf den Einsatzfall und den Werkstoff abgestimmt werden. Bei härteren Werkstoffen kann durch die Gestaltung der Einschnitte, z.B. durch die Größe, Anzahl, Tiefe und Form, die Nachgiebigkeit erhöht werden und umgekehrt.

Nach der Erfindung sind die Ausschnitte auf der einen Seite des Kippstegs zu den Ausschnitten auf der anderen Seite des Kippstegs in Längsrichtung versetzt angeordnet. Dadurch wird die Schwächung des Gummiprofils in einem Querschnitt verringert. Außerdem werden Resonanzschwingungen vermieden. Zum gleichen Zweck ist es vorteilhaft, die Ausschnitte in den Keilschultern zu den Ausschnitten in den Streifleisten in Längsrichtung zu versetzen, wobei die Abstände zwischen den Ausschnitten unterschiedlich und dem Schwingungsverhalten des Wischblatts angepasst werden können.

Gemäß einer Ausgestaltung der Erfindung kann auf eine Schwächung des Gummiprofils völlig verzichtet werden, indem die Keilschultern und/oder die Streifleisten an den einander zugewandten Flächen Rippen aufweisen, die quer zum Kippsteg verlaufen. Beim Umlegen der Wischleiste bilden die Rippen kleine Kontaktflächen und Auflagestellen, die eine dämpfende Durchbiegung der Keilschulter bzw. der Streifleisten zwischen den Rippen ermöglichen. Dabei können die Rippen zu beiden Seiten des Kippstegs symmetrisch oder in Längsrichtung versetzt zueinander angeordnet werden. Ferner können die Rippen an den Keilschultern die Rippen an den Streifleisten überdecken oder zu diesen in Längsrichtung des Gummiprofils versetzt angeordnet sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
Fig. 1 eine perspektivische Ansicht eines erfindungsgemäßen Wischgummis,
Fig. 2 und 3 Varianten zur Fig. 1,
Fig. 4 eine perspektivische Ansicht eines Wischgummis mit Verformungen der Keilschultern,
Fig. 5 eine Variante zur Fig. 5,
Fig. 6 einen Wischgummi mit Rippen zwischen den Keilschultern und den Streifleisten,
Fig. 7 bis 9 Varianten zur Fig. 6,
Fig. 10 eine Ausführung mit Querstegen zwischen den Keilschultern und den Streifleisten.

### Beschreibung der Ausführungsbeispiele

Ein Wischgummi 10 besitzt eine Kopfleiste 12 mit seitlichen Längsnuten 18, in die Federschienen als Tragelemente eingelegt werden können. Die Längsnuten 18 bilden zwischen sich einen Steg 20. Die Kopfleiste 12 ist über einen weiteren Steg 24 mit Streifleisten 14 verbunden, die sich zu beiden Seiten des Stegs 24 in Längsrichtung des Wischgummis 10 erstrecken und mit der Kopfleiste 12 seitliche Längsnuten 22 bilden. Mit den Streifleisten 14 ist über einen Kippsteg 32 eine Wischleiste 16 verbunden, die eine Wischlippe 34 umfasst, sich zum Kippsteg 32 hin verbreitert und seitliche Keilschultern 36 aufweist. Zwischen den Keilschultern 36 und den Streifleisten 14 befinden sich zu beiden Seiten des Kippstegs 32 Längsnuten 26, deren obere Nutflanke mit 28 und deren untere Nutflanke mit 30 gekennzeichnet sind.

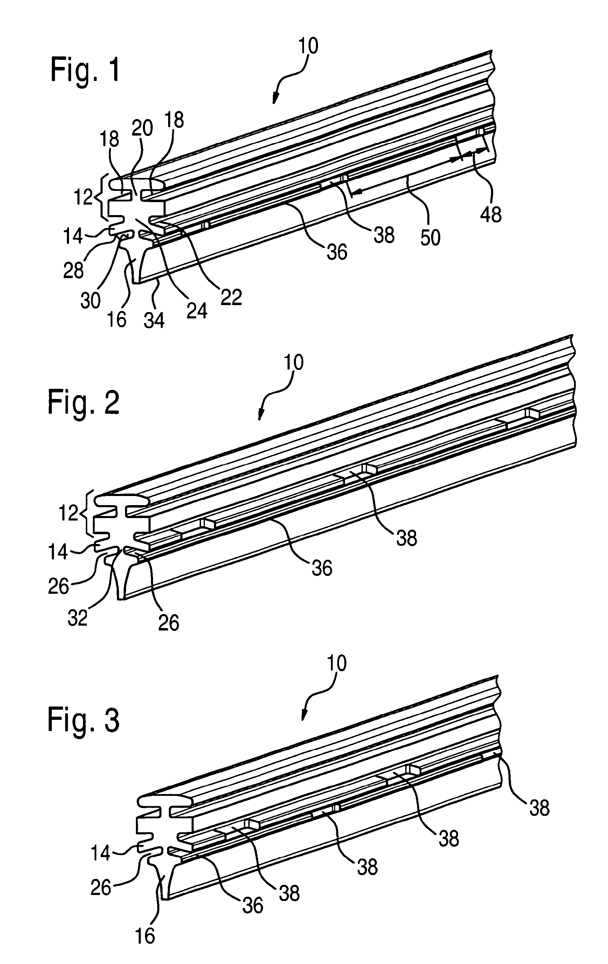

In der Ausführung nach Fig. 1 weisen die Keilschultern 36 Ausschnitte 38 auf. Diese haben eine Breite 48 von circa fünf Millimetern und einen Abstand 50 voneinander, der ein Vielfaches der Breite 48 beträgt. Die Abstände 50 können über der Länge des Wischgummis 10 gleich oder verschieden sein. Ferner können die Ausschnitte 38 bis zum Kippsteg 32 reichen oder ein Stück weit vor diesem enden. Durch die Gestaltung und Anordnung der Ausschnitte 38 kann die Nachgiebigkeit der Abschnitte der Keilschultern 36 zwischen den Ausschnitten 38 variiert werden und den Einsatzbedingungen des Wischgummis 10 und der Härte des Werkstoffs angepasst werden. Beim Umlegen der Wischleiste 16 in den Wendepunkten der Wischbewegung des Scheibenwischers berühren die Nutflanken 28 und 30 einer Längsseite des Wischgummis 10 einander. Durch Abschnitte zwischen den Ausschnitten 38 wird der Stoß federnd und dämpfend aufgenommen, sodass sich die Umlegegeräusche stark verringern.

Bei der Ausführung nach Fig. 2 sind die Ausschnitte 38 in den Streifleisten 14 vorgesehen, während die Ausführung nach Fig. 3 sowohl Ausschnitte 38 in den Keilschultern 36 als auch in den Streifleisten 14 aufweist. Dabei können sich die Ausschnitte 38 in den Streifleisten 14 mit den Ausschnitten 38 in den Keilschultern 36 überdecken oder sie können in Längsrichtung des Wischgummis 10 versetzt angeordnet sein. Außerdem können die Ausschnitte 38 in den Streifleisten 14 bzw. den Keilschultern 36 der einen Seite des Wischgummis 10 symmetrisch zu den Ausschnitten 38 der anderen Seite des Wischgummis 10 liegen oder sie können ebenfalls in Längsrichtung versetzt zu diesen angeordnet sein. Durch die versetzte Anordnung der Ausschnitte 38 wird vermieden, dass der Wischgummi 10 in einem Querschnitt zu stark geschwächt wird. Außerdem wird vermieden, dass Resonanzschwingungen entstehen.

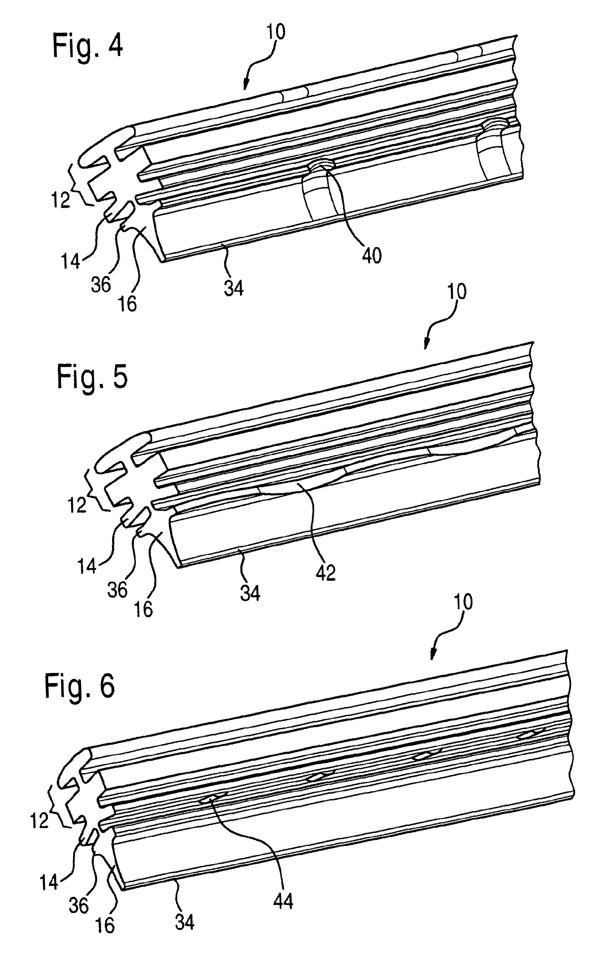

Bei der Ausführung nach Fig. 4 besitzen die Keilschultern 36 örtliche Verformungen 40, durch die der Abstand zu den Streifleisten 14 geringer ist als in den benachbarten Bereichen, sodass die Nutflanken 28 und 30 sich im Bereich der Verformungen 40 zunächst berühren und sich dann über die gesamte Länge anlegen. Die örtlichen Verformungen 40 können dadurch erzeugt werden, dass zwischen der Extrusion und der Polymerisation der Gummi an den vorbestimmten Stellen plastisch verformt, z.B. eingedrückt, wird. Während der Polymerisation wird alles ausgehärtet und die Verformungen 40 werden fixiert. Ähnlich wie die Ausschnitte 38 werden die Verformungen 40 an den Keilschultern 36 und Streifleisten 14 verteilt angeordnet.

Bei der Ausführung nach Fig. 5 besitzen die Keilschultern 36 örtliche Verformungen 42, die die Breite der Keilschultern 36 in Längsrichtung variieren. Auch hierbei können die Verformungen 42 an den Keilschultern 36 und den Streifleisten 14 wie die Verformungen 40 erzeugt und verteilt angeordnet werden.

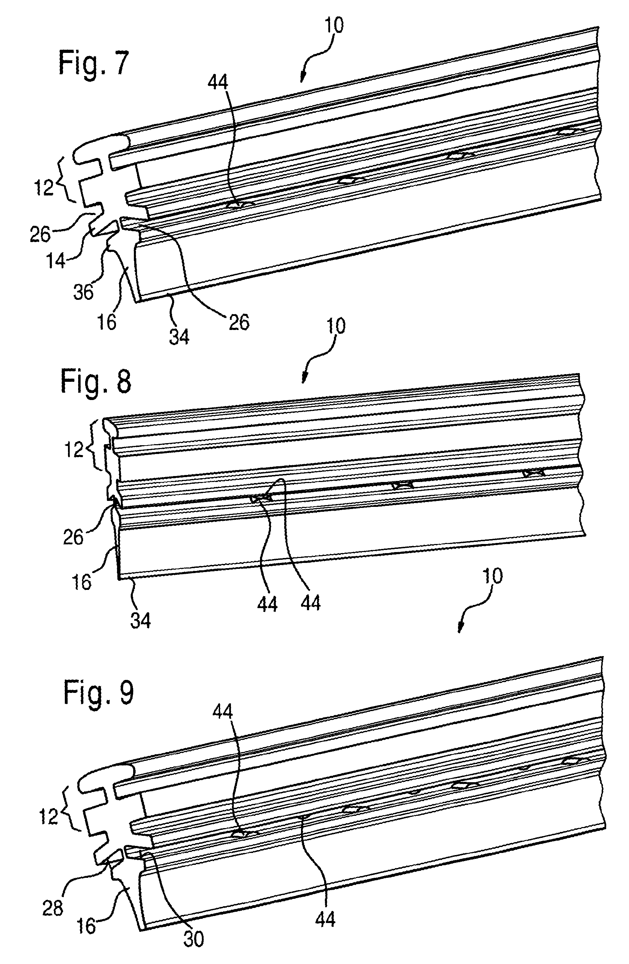

Die Ausführungen nach Fig. 6 bis Fig. 9 weisen an den Nutflanken 28, 30 der Nut 26 zum Kippsteg 32 quer verlaufende Rippen 44 auf. Diese sind nach Fig. 6 an der oberen Nutflanke 28 an der Streifleiste 14 angeordnet, während nach Fig. 7 die Rippen 44 an der unteren Nutflanke 30 an der Keilschulter 36 angeordnet sind. Bei den Ausführungen nach Fig. 8 und Fig. 9 sind sowohl an der oberen Nutflanke 28 als auch an der unteren Nutflanke 30 Rippen 44 angeordnet, die sich nach Fig. 8 überdecken, während sie nach Fig. 9 in Längsrichtung des Wischgummis 10 versetzt angeordnet sind. Entsprechend können die Rippen 44 symmetrisch zum Kippsteg 32 liegen oder in Längsrichtung versetzt angeordnet sein.

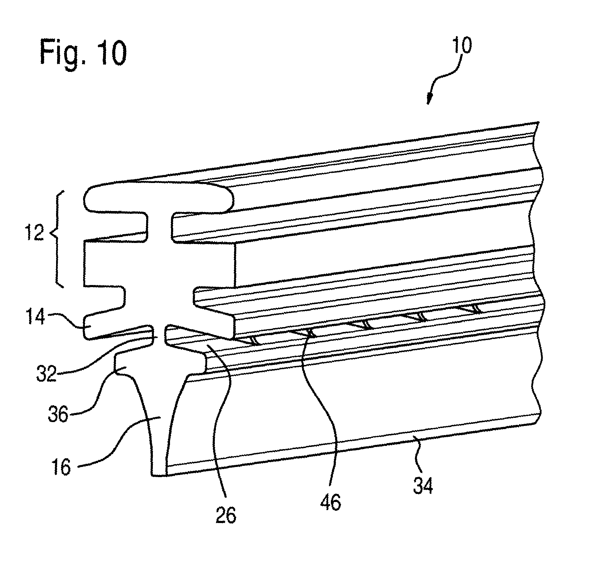

Die Ausführung nach Fig. 10 weist Querstege 46 auf, die die Streifleisten 14 mit den Keilschultern 36 verbinden, wobei die Abstände untereinander in Längsrichtung des Wischgummis 10 ähnlich verteilt sind wie die Abstände der Rippen 44. Beim Umlegen der Wischleiste 16 werden die elastischen Querstege 46 zusammengedrückt, wobei sich die Abstützkraft stetig vergrößert, sodass keine Umlegegeräusche entstehen können.

Die Wischgummis 10 werden zweckmäßigerweise im Spritzgießverfahren oder im Extrusionsverfahren hergestellt. Dabei können die Ausschnitte 38 automatisch weggeschnitten, weggeblasen, weggelasert oder weggebrannt werden. Ferner kann eine bewegte impulsierende Düse das Gummiprofil an der gewünschten Stelle eindrücken und verformen, sodass hier Verengungen zwischen der Keilschulter 36 und der Streifleiste 14 entstehen.

Eine variierende Breite der Keilschulter 36 bzw. der Streifleiste 14 kann durch einen variierenden Druck oder eine variierende Extrusionsgeschwindigkeit erreicht werden, wodurch in diesem Bereich ein welliges Profil entsteht.

Um die Rippen 44 und die Querstege 46 zu erzeugen, wird zweckmäßigerweise während der Extrusion, aber vor der Vulkanisation, Material hinzugefügt, z.B. indem mit einer Injektionsspritze auf bestimmte Stellen des Wischgummis 10 Gummimaterial, Silikon, Klebstoff usw. hinzugefügt wird. Das Material wird dann während der Vulkanisation ausgehärtet. Wird das Material nach der Vulkanisation hinzugefügt, kann es unter dem Einfluss von Wärme oder einer anderen Strahlung ausgehärtet werden.

## Patentansprüche

1. Wischgummi (10) mit einer Kopfleiste (12) und Streifleisten (14), an die sich über einen Kippsteg (32) eine Wischleiste (16) anschließt, die an ihren Längsseiten Keilschultern (36) besitzt, die sich beim Umlegen der Wischleiste (16) an den Streifleisten (14) abstützen, wobei an den Keilschultern (36) und/oder an den Streifleisten (14) Maßnahmen (38, 40, 42, 44, 46) vorgesehen sind, die die Geräuschentwicklung beim Kontakt zwischen den Keilschultern (36) und den Streifleisten (14) verringern, wobei er eine Härte zwischen fünfzig und fünfundsechzig Shorehärte A (ShA) aufweist und die Härte auf die Gestaltung des Stegprofils (14, 24, 32, 36) so abgestimmt ist, dass sich eine minimale Geräuschentwicklung beim Umlegevorgang ergibt, **dadurch gekennzeichnet, dass** die Keilschultern (36) und/oder die Streifleisten (14) von der Längsseite zum Kippsteg (32) hin verlaufende Ausschnitte (38) besitzen, deren Abstände (50) voneinander mindestens doppelt so groß sind wie deren Breiten (48) und die Ausschnitte (38) auf der einen Seite des Kippstegs (32) zu den Ausschnitten (38) auf der anderen Seite des Kippstegs (32) in Längsrichtung versetzt angeordnet sind.

2. Wischgummi (10) nach Anspruch 1, **dadurch gekennzeichnet, dass** die Ausschnitte (38) ein Stück weit vor dem Kippsteg (32) enden.

3. Wischgummi (10) nach einem der vorhergehenden Ansprüche, **dadurch gekennzeichnet, dass** die Ausschnitte (38) in den Keilschultern (36) zu den Ausschnitten (38) in den Streifleisten (14) in Längsrichtung versetzt angeordnet sind.

4. Verfahren zum Herstellen eines Wischgummis (10) nach einem der Ansprüche 1 bis 3, **dadurch gekennzeichnet, dass** die Ausschnitte (38) automatisch durch Schneiden, Blasen, Brennen oder Lasern hergestellt werden, wobei eine pulsierende Düse den Wischgummi (10) örtlich so verformt, dass Verengungen zwischen den Keilschultern (36) und den Streifleisten (14) entstehen.

5. Verfahren zum Herstellen eines Wischgummis (10) nach Anspruch 3, **dadurch gekennzeichnet, dass** während der Extrusion vor der Vulkanisation mit einer Injektionsspritze Material hinzugefügt wird, das bei der nachfolgenden Vulkanisation ausgehärtet wird.

6. Verfahren zum Herstellen eines Wischgummis (10) nach einem der Ansprüche 1 bis 3, **dadurch gekennzeichnet, dass** nach der Vulkanisation mit einer Injektionsspritze Material hinzugefügt wird, das unter Einfluss von Wärme oder einer anderen Strahlung ausgehärtet wird.

## Claims

1. Wiper blade rubber (10) with a head strip (12) and brushing strips (14) which are adjoined via a tilting web (32) with a wiping strip (16), the longitudinal sides of which have wedge shoulders (36) which are supported on the brushing strips (14) when the wiping strip (16) turns over, wherein measures (38, 40, 42, 44, 46) reducing the generation of noise when the wedge shoulders (36) and the brushing strips (14) come into contact with each other are provided on the wedge shoulders (36) and/or the brushing strips (14), and wherein said wiper blade rubber has a hardness of between 50 and 65 Shore hardness A (ShA), and the hardness is matched to the design of the web profile (14, 24, 32, 36) in such a manner that there is minimum generation of noise during the turning-over process, **characterized in that** the wedge shoulders (36) and/or the brushing strips (14) have cutouts (38) which run from the longitudinal side towards the tilting web (32), and the distances (50) of which from one another are at least twice the size as the width (48) thereof, and the cutouts (38) on one side of the tilting web (32) are offset in the longitudinal direction with respect to the cutouts (38) on the other side of the tilting web (32).

2. Wiper blade rubber (10) according to Claim 1, **characterized in that** the cutouts (38) end at a distance in front of the tilting web (32).

3. Wiper blade rubber (10) according to one of the preceding claims, **characterized in that** the cutouts (38) in the wedge shoulders (36) are offset in the longitudinal direction with respect to the cutouts (38) in the brushing strips (14).

4. Method for producing a wiper blade rubber (10) according to one of Claims 1 to 3, **characterized in that** the cutouts (38) are produced automatically by cutting, blow-moulding, burning or by means of lasers, a pulsating nozzle locally deforming the wiper blade rubber (10) in such a manner that contractions arise between the wedge shoulders (36) and the brushing strips (14).

5. Method for producing a wiper blade rubber (10) according to Claim 3, **characterized in that**, during the extrusion and prior to the vulcanization, material is inserted with an injection syringe and is cured during the subsequent vulcanization.

6. Method for producing a wiper blade rubber (10) according to one of Claims 1 to 3, **characterized in that**, after the vulcanization, material is inserted with an injection syringe and is cured under the influence of heat or a different type of radiation.

## Revendications

1. Elément d'essuyage en caoutchouc (10) comprenant une baguette de tête (12) et des baguettes de raclage (14) auxquelles se raccorde une raclette de balai d'essuie-glace (16) par le biais d'une nervure basculante (32), la raclette de balai d'essuie-glace présentant sur ses côtés longitudinaux des épaulements de clavetage (36) qui s'appuient, lors du repliement de la raclette de balai d'essuie-glace (16), contre les baguettes de raclage (14), des mesures (38, 40, 42, 44, 46) étant mises en oeuvre au niveau des épaulements de clavetage (36) et/ou des baguettes de raclage (14) pour réduire le développement de bruit lors du contact entre les épaulements de clavetage (36) et les baguettes de raclage (14), l'élément d'essuyage en caoutchouc présentant une dureté entre cinquante et soixante-cinq dureté Shore A (ShA), et la dureté étant adaptée à la forme du profilé nervuré (14, 24, 32, 36) de telle sorte qu'un développement de bruit minimal se produise lors d'une opération de repliement, **caractérisé en ce que** les épaulements de clavetage (36) et/ou les baguettes de raclage (14) possèdent des découpures (38) s'étendant depuis le côté longitudinal vers la nervure basculante (32), dont les espacements (50) les unes des autres sont au moins deux fois plus grands que leur largeur (48) et les découpures (38) d'un côté de la nervure basculante (32) sont disposées de manière décalée dans la direction longitudinale vers les découpures (38) de l'autre côté de la nervure basculante (32).

2. Elément d'essuyage en caoutchouc (10) selon la revendication 1, **caractérisé en ce que** les découpures (38) se terminent quelque peu à l'écart de la nervure basculante (32).

3. Elément d'essuyage en caoutchouc (10) selon l'une quelconque des revendications précédentes, **caractérisé en ce que** les découpures (38) dans les épaulements de clavetage (36) sont disposées de manière décalée dans la direction longitudinale par rapport aux découpures (38) dans les baguettes de raclage (14).

4. Procédé de fabrication d'un élément d'essuyage en caoutchouc (10) selon l'une quelconque des revendications 1 à 3, **caractérisé en ce que** les découpures (38) sont fabriquées automatiquement par découpage, soufflage, brûlage ou par laser, une buse pulsante déformant localement l'élément d'essuyage en caoutchouc (10) de telle sorte que des rétrécissements soient produits entre les épaulements de clavetage (36) et les baguettes de raclage (14).

5. Procédé de fabrication d'un élément d'essuyage en caoutchouc (10) selon la revendication 3, **caractérisé en ce que** pendant l'extrusion avant la vulcanisation avec une seringue d'injection, du matériau est ajusté, lequel est durci lors de la vulcanisation subséquente.

6. Procédé de fabrication d'un élément d'essuyage en caoutchouc (10) selon l'une quelconque des revendications 1 à 3, **caractérisé en ce qu'**après la vulcanisation avec une seringue d'injection, du matériau est ajouté, lequel est durci sous l'influence de la chaleur ou d'un autre rayonnement.
